# FASCICULE DE BREVET EUROPEEN

(11) **EP 3 211 575 B1**
(45) Date de publication et mention de la délivrance du brevet: **19.09.2018**
(21) Numéro de dépôt: 17157681.2
(22) Date de dépôt: 23.02.2017
(51) Int. Cl.: G06Q 10/08

(54) **PROCÉDÉ DE GESTION D'ACHEMINEMENT DE COLIS, ET SYSTÈME INFORMATIQUE DE GESTION ET CONTENEURS ASSOCIÉS**
VERFAHREN ZUR PAKETZUSTELLUNG UND DAMIT VERBUNDENEN COMPUTERSYSTEM UND CONTAINER
PROCESS FOR MANAGING PARCEL DELIVERY AND ASSOCIATED COMPUTER SYSTEM AND CONTAINERS

(30) Priorité: 23.02.2016 FR 1651478
(43) Date de publication de la demande: 30.08.2017
(73) Titulaire: Manufacture D'appareillage Electrique De Cahors, 46000 Cahors (FR)
(72) Inventeur: TALAYSSAT, Mathieu, 46090 MERCUES (FR); BORJA, Pierre Laurent, 31790 SAINT SAUVEUR (FR); DURIEZ, Patrick, 62138 BILLY BERCLAU (FR)
(74) Mandataire: IPAZ

(56) Documents cités:
- WO-A1-2015/100390

## Description

L'invention concerne un procédé de gestion d'acheminement logistique d'objets auprès d'utilisateurs multiples, pour distribution et/ou collecte par un opérateur logistique, en particulier un opérateur indépendant desdits utilisateurs.

Il comprend des opérations de transfert, de dépôt puis retrait, dans un conteneur commandé par une serrure électronique, pouvant être installés sans connexion électronique avec le serveur de gestion.

Un colis à livrer est déposé dans ce conteneur. L'utilisateur destinataire reçoit sur son téléphone informatisé un code de disponibilité valable quelques jours, indiquant où retirer son colis. Arrivé au conteneur, il saisit le code conteneur dans l'application. Celle-ci fournit alors un code d'ouverture valable quelques minutes, et prépare automatiquement un message de compte-rendu. Le conteneur vérifie le code d'ouverture et ouvre son casier.

Dès que le téléphone est connecté au réseau, il envoie automatiquement son compte-rendu au serveur de gestion.

L'invention porte aussi sur un conteneur agencé pour un tel procédé.

Selon une particularité, le code conteneur comprend un code de statut calculé par le conteneur.

Selon une autre particularité, le conteneur communique électroniquement de façon locale avec l'application mobile de l'utilisateur, et lui envoie une confirmation d'ouverture voire de retrait effectif, que l'application transmet au serveur dans son compte-rendu.

### Etat de la technique

Dans le domaine de la distribution du courrier et des colis, le volume de colis distribués a grandement augmenté depuis le développement du commerce à distance géré par l'Internet, aussi appelé "e-commerce", soit depuis environ une dizaine d'années. En effet, les produits et marchandises matériels sont commandés sur l'Internet, mais représentent des objets physiques qui doivent être acheminés et livrés auprès des clients. Or les clients ne sont en général pas présents sur le lieu de la livraison, qui peut être différent de leur domicile. Et même pour une livraison à domicile, ces colis sont souvent trop volumineux pour être déposés dans la boîte aux lettres personnelle du client destinataire telle qu'elle existe le plus souvent. Il se pose ainsi des problèmes de disponibilité dans le temps combinés avec des problèmes d'encombrement et de coût.

Pour pallier certains de ces problèmes, des solutions existent qui consistent par exemple à organiser des "points retrait" dans des commerces qui sont accessibles aux clients pendant leurs heures d'ouverture.

D'autres solutions consistent aussi par exemple à installer des consignes automatisées formant des bornes de retrait, situées par exemple dans des endroits de passage comme des gares ou des centres commerciaux. Un tel dispositif comprend en général un ou plusieurs casiers métalliques rigides qui sont verrouillables par commande électronique. Ces casiers sont connectés de façon électronique à un réseau de communication et sont gérés à distance par un système informatique au fur et à mesure des besoins, ce qui permet un usage "mutualisé". C'est à dire que chacun peut être utilisé successivement pour plusieurs livraisons différentes destinées à des destinataires différents.

Par exemple, le document WO 2015/100390 décrit un système de consigne automatisé. Dans ce système, chaque borne 2 comprend un ordinateur 18 qui gère plusieurs casiers 8. Cet ordinateur local communique par une connexion internet 24 avec un système de gestion distant fonctionnant dans un "cloud" hébergé au sein de l'Internet.

De telles bornes sont en général installées dans un bâtiment qui les alimente en énergie, et communiquent par exemple par le réseau téléphonique filaire ou par onde porteuses dans le réseau électrique d'alimentation, ou par réseaux hertziens cellulaires. Dans ce cas, elle est en général reliée à un système d'envoi de données de machine à machine ou "M2M" (pour "Machine To Machine") qui permet de communiquer par liaison radiofréquence, par exemple cellulaire grâce une carte SIM téléphonique selon une norme téléphonique telle GSM, ou 3G ou 4G, ou par liaison "bas-débit" sur un réseau radiofréquence spécialisé tel que celui de la société Sigfox.

Ces solutions présentent cependant des contraintes techniques et de coût et ne répondent pas à tous les besoins. En particulier, elles représentent un coût et une complexité non négligeables. De plus tous ces systèmes nécessitent d'être en communication électronique avec le système informatique de gestion, comme dans les documents WO9754142, WO0139638 ou WO2015/100390.

Un but de l'invention est de fournir une solution permettant une distribution ou une collecte au plus près des clients, fiable et rapide, y compris dans des zones peu denses telles que périurbaines ou rurales. Cet objectif est recherché en limitant les coûts et les contraintes d'installation, d'exploitation et de maintenance.

### Exposé de l'invention

L'invention propose un procédé de gestion d'acheminement logistique d'un ou plusieurs objets, typiquement par distribution ou collecte, par au moins un opérateur logistique. Ce procédé comprend une ou plusieurs opérations de transfert d'un objet, par dépôt puis retrait dudit objet dans un conteneur de dépôt dont l'accès au contenu est commandé par une serrure à commande par contrôleur électronique ; au moins une desdites opérations de transfert d'un objet déterminé étant réalisée par un utilisateur déterminé, destinataire ou expéditeur, pouvant être un utilisateur individuel ou un groupe d'utilisateurs.

Selon l'invention, ce procédé comprend les étapes suivantes :
- envoi, par un système informatique de gestion, d'un message électronique de disponibilité à un terminal portable informatisé équipant ledit utilisateur et apte à recevoir ledit message, d'un type communiquant ou apte à communiquer avec un réseau de communication sans fil et qui exécute ou est apte à exécuter au moins une application mobile utilisateur, ledit message comprenant un code de disponibilité calculé pour représenter au moins une identification d'un conteneur déterminé pour ladite opération de transfert ;
- réception dudit message électronique de disponibilité par ledit terminal portable informatisé, et affichage ou émission à destination de l'utilisateur d'une information représentant au moins une identification dudit conteneur ;
- à l'issue d'un déplacement dudit utilisateur jusqu'à portée dudit conteneur, réception par l'application utilisateur d'un code de conteneur représentant ledit conteneur, par saisie manuelle par l'utilisateur ou lecture électronique d'un code figurant sur le conteneur concerné par l'opération de transfert, ou par communication électronique locale du terminal avec ledit conteneur, créant ainsi pour l'utilisateur la nécessité d'être présent ou à portée dudit conteneur ;
- vérification optionnelle que ledit code de conteneur correspond bien au conteneur concerné par l'opération de transfert, par comparaison avec le code de disponibilité, permettant la continuation de l'opération en cas de correspondance ;
- fourniture (purement locale : calcul ou lecture en mémoire), réalisée par l'application utilisateur sans nécessiter de communiquer avec le réseau, d'un code d'ouverture calculé au moins à partir du code de disponibilité et représentant au moins :
   ∘ une identification dudit conteneur, et
   ∘ une plage temporelle d'ouverture, déterminée pour être postérieure à l'instant présent et pour donner à l'utilisateur un temps suffisant pour réaliser son opération de transfert (dépôt ou retrait), notamment dans des conditions normales, et optionnellement une plage temporelle dans laquelle cette possibilité est évaluée comme réalisable (possiblement en fonction d'un seuil de probabilité) en fonction de la position du conteneur par rapport à la localisation de l'utilisateur lors de sa demande ;
- préparation, par l'application utilisateur, d'un message de compte-rendu d'opération comprenant au moins une donnée d'ouverture demandée, qui représente l'accomplissement de l'étape de fourniture du code d'ouverture ;
- après détection d'une connectivité du terminal portable utilisateur avec le réseau de communication sans fil, possiblement après déplacement de l'utilisateur, envoi automatique dudit message de compte-rendu d'opération depuis le terminal portable utilisateur vers le système informatique de gestion, sans nécessiter d'intervention de l'utilisateur ; et
- mémorisation par ledit système informatique de gestion d'au moins une donnée représentant l'accomplissement de l'opération de transfert par l'utilisateur, et de préférence un changement d'état du conteneur entre occupé et libre ou inversement ;

Selon l'invention, le procédé comprend en outre les étapes suivantes :
- réception du code d'ouverture par le conteneur depuis l'utilisateur par saisie manuelle ou depuis l'application ;
- détermination par le conteneur d'une plage temporelle d'ouverture, par la serrure électronique à partir du code d'ouverture, par extraction d'une donnée temporelle à partir du code d'ouverture ou par calcul à partir de l'instant de réception dudit code d'ouverture ; et
- vérification par le conteneur de la validité dudit code d'ouverture, comprenant au moins :
   ∘ une vérification que l'instant présent est bien inclus dans la ladite plage temporelle d'ouverture, et
   ∘ si cela n'a pas été fait précédemment par l'application utilisateur, une vérification que ledit code d'ouverture correspond bien au conteneur concerné par l'opération de transfert, par comparaison avec une identification mémorisée dans ledit conteneur ;
- si ladite vérification indique que ledit code d'ouverture est valide, commande d'ouverture ou de déverrouillage dudit conteneur de façon à donner accès audit objet.

Ainsi, à la différence de l'état de la technique divulgué par exemple dans le document WO 2015/100390, ce procédé selon l'invention fonctionne sans communication entre l'électronique du conteneur de dépôt et le système informatique de gestion centralisé. Cette différence peut constituer un inconvénient, par exemple en matière de fiabilité. On notera cependant que l'invention prévoit un délai temporel qui est déterminé par le code électronique qui est saisi sur le terminal du conteneur, calculé à partir de l'instant de cette saisie et/ou par extraction d'un valeur contenue dans ce même code. Le calcul et la mise en oeuvre de cette plage temporelle postérieure à la saisie du code constitue une complexité qui n'existe pas dans l'état de la technique du document WO 2015/100390. Mais cette caractéristique est particulièrement bien adaptée au fonctionnement hors-ligne du conteneur de l'invention, en ce qu'elle permet d'améliorer la fiabilité du processus et en limiter les inconvénients.

Selon les modes de réalisation, ou selon les réglages du système, la plage temporelle d'ouverture incluse dans le code d'ouverture, fourni par l'application utilisateur, peut être déterminée de différentes façons. Typiquement, elle est déterminée par l'application utilisateur, en horodatage voire aussi en durée. Sa valeur ou son heure d'expiration est par exemple incluse dans le message de compte-rendu envoyé par l'application au système de gestion. Celui-ci peut alors en tenir compte pour considérer que l'utilisateur a eu suffisamment de temps pour effectuer son transfert, et que le conteneur est disponible pour la suite des opérations aussitôt après cette expiration. En effet, du fait de la présence nécessaire de l'utilisateur devant le conteneur ou au moins à portée de celui-ci, la probabilité est très faible qu'il n'ait pas mené à bien l'opération qu'il était venu faire.

Dans certains modes de réalisation, ou dans certaines phases d'utilisation d'un conteneur, l'opération de transfert comprend un retrait par l'utilisateur d'un objet, notamment un colis, déposé auparavant dans le conteneur par un agent de livraison pour le compte de l'opérateur logistique, au cours d'une opération de transfert par dépôt et provenant d'un centre de distribution logistique.

En particulier, ladite opération de transfert par dépôt comprend les étapes suivantes :
- envoi, par le système informatique de gestion d'un message électronique vers un terminal portable informatisé équipant l'agent de l'opérateur logistique, communiquant ou apte à communiquer avec un réseau de communication sans fil et qui exécute au moins une application mobile logistique apte à recevoir ledit message, ledit message comprenant une donnée représentant un ordre de transfert, calculé pour représenter au moins une identification de l'opération de dépôt à effectuer, par exemple une identification du colis et/ou du conteneur, et de préférence les deux ;
- à l'issue d'un déplacement dudit agent logistique jusqu'à portée dudit conteneur, réalisation des phases suivantes, dans cet ordre ou dans un autre :
   ∘ réception par l'application logistique, notamment par lecture électronique et/ou saisie manuelle et/ou communication électronique avec l'objet, d'un code de colis identifiant l'objet et/ou l'opération de dépôt,
   ∘ réception par l'application logistique, notamment par lecture électronique et/ou saisie manuelle et/ou communication électronique avec l'objet, d'un code de conteneur identifiant le conteneur,
   ∘ dépôt de l'objet dans un volume de dépôt dudit conteneur,
   ∘ préparation, localement par l'application logistique, d'un message de compte-rendu d'opération comprenant au moins une donnée de dépôt effectué, qui représente l'accomplissement de l'opération de transfert par dépôt ;
- après détection d'une connectivité du terminal portable logistique avec le réseau de communication sans fil, possiblement après déplacement de l'agent logistique, envoi dudit message de compte-rendu d'opération depuis ledit terminal portable logistique vers le système informatique de gestion, ; et
- mémorisation par ledit système informatique de gestion d'au moins une donnée représentant l'accomplissement de l'opération de transfert par dépôt.

Dans d'autres modes de réalisation, ou dans d'autres phases d'utilisation d'un conteneur, l'opération de transfert comprend un dépôt par l'utilisateur d'un objet dans le conteneur, notamment un colis.

Typiquement, le procédé comprend ultérieurement une collecte dudit objet par un agent de collecte pour le compte de l'opérateur logistique.

En combinant différentes phases du procédé pour un même conteneur et un même objet, une telle opération de dépôt par un utilisateur peut aussi être suivie par une opération de transfert par retrait réalisée par un autre utilisateur, sans intervention d'un agent logistique agissant pour le compte de l'opérateur.

Dans certains modes de réalisation, le procédé n'emploie qu'une seule plage temporelle portant sur l'activité de l'utilisateur : la plage d'ouverture.

Selon une particularité, la plage d'ouverture est déterminée par calcul à partir de l'instant de réception du code de conteneur, ou d'une demande reçue ultérieurement de l'utilisateur, par exemple pour fournir quelques minutes ou dizaines de minutes.

Selon une autre particularité, la plage d'ouverture est déterminée par calcul à partir d'un horodatage dudit message de disponibilité, par exemple pour fournir une plage de quelques jours, débutant immédiatement ou possiblement après un délai déterminé.

Dans certains modes de réalisation, ces particularités peuvent être combinées entre elles, par exemple en prenant l'intersection ou la réunion des plages temporelles ainsi calculées. Ces plages temporelles sont par exemple déterminées par exemple à différents moments.

Dans d'autres modes de réalisation, le procédé combine plusieurs plages temporelles déterminées par exemple à différents moments.

Selon une particularité, le procédé selon l'invention comprend en outre les étapes suivantes, réalisées par l'application utilisateur sans nécessiter de communiquer avec le réseau :
- détermination d'une plage temporelle de disponibilité, à partir du message de disponibilité, à partir du code de disponibilité par extraction d'une donnée de plage calculée par le système de gestion, ou par calcul à partir d'un horodatage dudit message de disponibilité ; et
- vérification de la validité du code de disponibilité, comprenant au moins une vérification que l'instant présent est inclus dans ladite plage temporelle de disponibilité.

Ladite vérification de validité conditionne alors la fourniture du code d'ouverture. Ce code d'ouverture est alors calculé par l'application utilisateur et contient lui-même une donnée représentant la plage temporelle d'ouverture, ou une donnée faisant référence à une valeur de plage mémorisée dans le contrôleur du conteneur.

De préférence, la vérification de validité du code de disponibilité ou du code d'ouverture ou des deux est agencée pour permettre une unique utilisation dudit code. Par exemple, par une mémorisation de l'utilisation au sein de l'application utilisateur, et une validation de disponibilité comprenant une vérification de cette mémoire. Par exemple aussi par une mémorisation dans la mémoire du conteneur, et une validation du code d'ouverture comprenant une validation de cette mémoire.

Par exemple, la plage temporelle d'ouverture se termine au bout d'une durée comprise entre 1 mn et 30 mn après la fourniture du code d'ouverture, et notamment comprise entre 5 mn et 20 mn, et par exemple environ 15 mn ; tandis que la plage temporelle de disponibilité, lorsqu'elle existe, se termine au bout d'une durée comprise entre 1 jour et 10 jours après l'envoi du code de disponibilité la fourniture (202) du code de disponibilité (D21), et notamment comprise entre 2 jours et 6 jours, et par exemple environ 3 jours.

Selon une particularité du procédé :
- le conteneur calcule et affiche, en permanence ou en réponse à une action de l'utilisateur ou de l'application utilisateur de son terminal, au moins un code de statut représentant un ou plusieurs états dudit conteneur à l'instant présent, parmi les états suivants :
   o une identification univoque d'un ou plusieurs volumes de dépôt commandés au sein dudit conteneur,
   ∘ un niveau de capacité de fonctionnement d'un ou plusieurs de ses composants,
   ∘ un état d'occupation d'un ou plusieurs volumes de dépôt commandés au sein dudit conteneur, et
   ∘ un état ou une valeur d'une horloge qu'il utilise pour vérifier la validité des codes d'ouverture qu'il reçoit ;
- l'étape de réception du code de conteneur par l'application utilisateur comprend une utilisation dudit code de statut en tant que tout ou partie du code conteneur ;
- l'étape de vérification d'identification du conteneur est réalisée par l'application utilisateur, et inclut en outre une vérification que le code de statut reçu correspond à un état acceptable pour la poursuite de l'opération de transfert ;
- le compte-rendu d'opération préparé par l'application utilisateur comprend en outre au moins une donnée d'ouverture possible, qui représente une vérification satisfaisante du code de statut fourni par le conteneur.

L'utilisation de ces deux plages différentes permet par exemple de préciser et d'optimiser l'utilisation du conteneur. La plage de disponibilité peut ainsi être déterminée suffisamment large pour permettre à l'utilisateur de s'organiser à son aise pour se rendre auprès du conteneur, par exemple quelques jours. La plage d'ouverture peut de son côté être déterminée plus courte, puisque l'utilisateur est nécessairement présent devant le conteneur lorsqu'il demande la fourniture du code d'ouverture et déclenche le calcul de cette plage d'ouverture. Une fois que le système de gestion connaît la position de la plage d'ouverture grâce au message de compte-rendu, par l'horodatage de sa préparation ou par la valeur de la plage d'ouverture, il peut ainsi considérer que l'opération a été effectuée sans attendre la fin de la plage de disponibilité. La durée restante de cette plage de disponibilité peut ainsi être utilisée pour une prochaine opération avec le même conteneur.

De préférence, la vérification de validité du code de disponibilité ou du code d'ouverture ou des deux comprend une vérification de l'identité d'un émetteur dudit code, par décryptage et/ou comparaison d'une donnée de signature électronique, par exemple par utilisation d'une clé publique pour décrypter une donnée qui a été encryptée avec une clé privée correspondant à ladite clé publique.

Selon d'autres aspects, l'invention propose :
- un procédé de traitement de données numériques, mis en oeuvre par un terminal portable informatisé de téléphonie, comprenant une exécution d'instructions de programme réalisant les opérations de l'application mobile au sein d'un procédé de gestion d'acheminement tel qu'exposé ici ;
- un procédé de traitement de données numériques réalisant une gestion d'un réseau de conteneurs, notamment non communicants voire autonome, comprenant :
   ∘ d'une part une exécution, par un ou plusieurs ordinateurs communiquant avec un réseau de téléphonie sans fil (par exemple cellulaire ou satellite), d'instructions de programme réalisant les opérations du système informatique de gestion au sein d'un procédé tel qu'exposé ici; et
   ∘ d'autre part une exécution, par une serrure électronique commandant l'accès au contenu d'un ou plusieurs conteneurs (chacun mono ou multi-casier), d'instructions de programme (logiciel et/ou câblé) réalisant les opérations du conteneur de dépôt au sein d'un procédé tel qu'exposé ici.
- un système informatique programmé pour réaliser les opérations du système informatique de gestion d'un procédé tel qu'exposé ici.
- un conteneur de dépôt comprenant un ou plusieurs volumes de dépôt dont l'accès au contenu est commandé par une serrure à commande par contrôleur électronique, lequel est programmé pour réaliser les opérations du conteneur d'un procédé tel qu'exposé ici.

Comme on le comprend, même si le conteneur est situé en zone d'ombre, l'application mobile de l'utilisateur émet automatiquement le message de compte rendu vers le système de gestion, dès que l'utilisateur revient à portée du réseau de communication.

Le système est donc tenu au courant de l'enclenchement de l'opération de transfert beaucoup plus rapidement que s'il devait attendre la fin de la plage temporelle totale allouée à l'utilisateur. Par exemple, cette information est transmise dès que l'utilisateur traverse une zone connectée en s'éloignant du conteneur, le plus souvent dans les minutes ou heures qui suivent, alors qu'il est typiquement nécessaire d'allouer plusieurs jours à l'utilisateur pour qu'il puisse se déplacer jusqu'au conteneur.

L'invention fournit ainsi une information en temps quasi réel de la récupération ou du dépôt du colis par le client, et donc l'avancement du processus ainsi que l'état de disponibilité de la boite. Cette information permet un suivi précis et fiable du circuit, et rend possible une meilleure optimisation de l'utilisation des installations.

Cette information est obtenue, en passant par le téléphone de l'utilisateur-client, mais sans aucune opération de sa part qui soit postérieure à l'accomplissement de son opération de transfert faisant l'objet de son attention. Avec l'invention, les opérations qu'il doit effectuer lui sont nécessaires pour réaliser son objectif personnel : l'opération de transfert, retrait ou dépôt du colis. Au contraire, si le procédé devait compter sur l'utilisateur pour envoyer de son propre chef un message de compte-rendu après l'opération, et en particulier dans le cas d'un retrait, ce compte-rendu serait souvent omis puisque cet utilisateur est un client qui a peu d'obligations vis-à-vis de l'opérateur du réseau de conteneurs.

L'invention permet ainsi d'installer des conteneurs ou "boîtes à colis" fonctionnels et d'un fonctionnement optimisé sans nécessiter une connexion longue distance avec le système informatique de gestion, voire même sans besoin d'un raccordement à un réseau d'énergie.

Le fonctionnement de la serrure peut ainsi utiliser une électronique simple, peu gourmande en énergie et peu coûteuse. La fiabilité en est améliorée, les coûts en sont diminués. Il devient plus intéressant de réaliser des bornes comprenant peu de casiers pour une même serrure, voire avec un seul casier, ce qui permet aussi une meilleure couverture du territoire.

Il est possible d'installer de tels conteneurs sans raccordement à un réseau de communication filaire, mais aussi dans des zones peu ou pas couvertes par des services de communication par ondes hertziennes, ici appelées "zones d'ombre". Il est même possible de les doter d'une alimentation électrique autonome, par exemple une batterie longue durée et/ou rechargée par un générateur local tel qu'un panneau photovoltaïque.

Des modes de réalisation variés de l'invention sont prévus, qui intègrent selon l'ensemble de leurs combinaisons possibles les différentes caractéristiques optionnelles exposées ici.

### Liste des figures

D'autres particularités et avantages de l'invention ressortiront de la description détaillée d'un mode de mise en oeuvre nullement limitatif, et des dessins annexés sur lesquels :
- la FIGURE 1 est un schéma qui illustre selon l'invention l'opération de dépôt d'un colis par un agent logistique dans le conteneur, lors d'une utilisation en distribution ;
- la FIGURE 2 est un schéma qui illustre selon l'invention l'opération de retrait d'un colis du conteneur par un client destinataire, à la suite de la FIGURE 1 ;
- la FIGURE 3 est un schéma qui illustre selon l'invention l'opération de dépôt d'un colis par un client dans le conteneur, lors d'une utilisation en collecte ;
- la FIGURE 4 est un organigramme qui illustre le déroulement de l'opération de dépôt de la FIGURE 1 ;
- la FIGURE 5 est un organigramme qui illustre le déroulement de l'opération de retrait de la FIGURE 2 ;
- la FIGURE 6 est un organigramme qui illustre le déroulement de l'opération de dépôt de la FIGURE 3 ;
- la FIGURE 7 est un organigramme qui illustre une partie du déroulement d'une opération de retrait similaire à celle de la FIGURE 2, selon une variante de l'invention avec saisie d'un code de statut calculé et affiché par le conteneur ;
- la FIGURE 8 est un organigramme qui illustre le déroulement d'une opération de retrait similaire à celle de la FIGURE 2, selon une variante de l'invention avec communication électronique de confirmation entre le conteneur et le terminal de l'utilisateur.

### Description d'un exemple de mode de réalisation

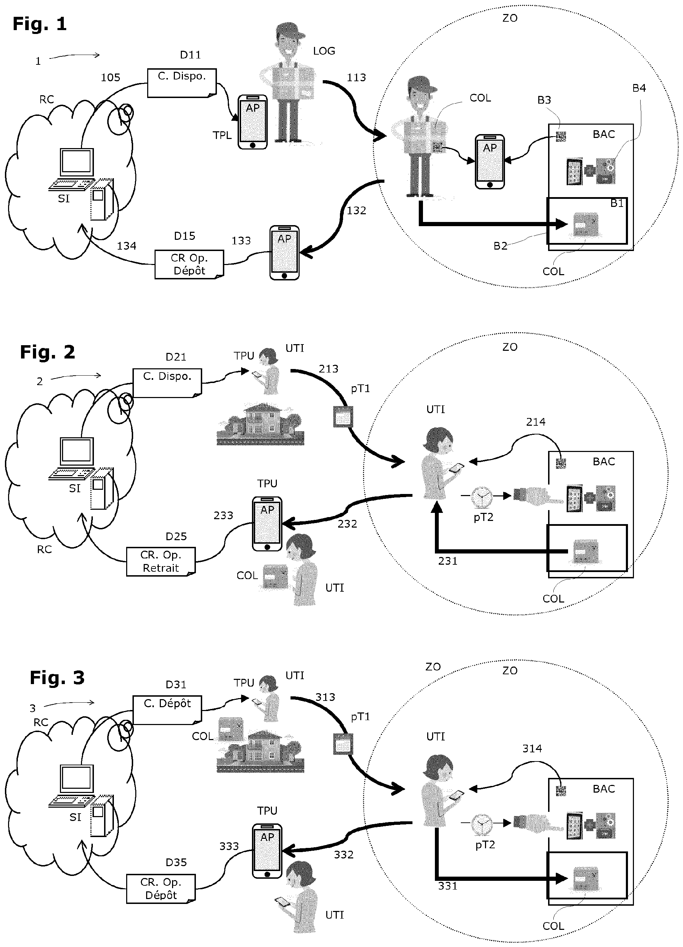

Les FIGURE 1 à FIGURE 3 illustrent différentes phase d'utilisation d'un conteneur, au sein d'un système logistique réalisant une distribution ou collecte de colis selon les besoins.

Le conteneur COL est ici représenté sous la forme d'un casier B1 unique, fermé par une porte B2 commandée par une serrure électromécanique comprenant un système de fermeture, un clavier à code B3 et d'un contrôleur électronique B4, par exemple un microcontrôleur programmable. Ce contrôleur exécute un logiciel fonctionnant de manière autonome, et sans communication longue distance. Ce logiciel est programmé pour valider ou générer un code d'accès à usage unique et horodaté, c'est-à-dire qu'il sera valable seulement pendant une période de temps pT2 déterminée. Il utilise par exemple ce code pour le comparer avec le code d'ouverture D23 ou D33 qui lui est fourni par l'utilisateur UTI, pour déterminer si ce code d'ouverture est valide ou non à un instant donné.

De telles serrures à code horodaté existent dans l'art antérieur, comme par exemple dans le document FR 3 009 113.

Dans le présent exemple, l'utilisation normale de la serrure se fait en tapant un code sur un clavier, par exemple un simple clavier numérique. Bien que l'invention puisse être mise en oeuvre sans cela, le conteneur est en outre muni d'un équipement de communication sans fil courte distance, non représenté, par exemple à champ proche de type NFC (pour "Near Field Communication"), ou de type radiofréquence à courte portée tel que selon la norme Wifi ou Bluetooth, par exemple en version 4.0.

Dans un mode de réalisation actuellement préféré, cet équipement de communication est principalement voire exclusivement utilisé par un ou des agents d'exploitation ou de maintenance, munis d'un terminal compatible et qui gèrent une pluralité de tels conteneurs, formant un "réseau" au sens d'un maillage géographique mais pas nécessairement au sens d'un réseau de communication. Cet équipement de communication permet à l'exploitant un accès à diverses fonctions techniques ou statistiques du conteneur, plus efficacement qu'avec le clavier à code, par exemple aux informations ou historique de la serrure, de suivi de batterie, ou de maintenance.

De tels agents d'exploitation peuvent être des agents logistiques LOG qui réalisent des opérations de dépôt 119 ou de collecte, mais pas nécessairement. Un tel réseau peut aussi être géré et/ou entretenu par un exploitant de réseau, lequel délègue ou loue à un ou des opérateurs logistiques l'utilisation de ses conteneurs, par exemple à la demande en fonction des besoins de ces opérateurs logistiques.

Un système informatique de gestion SI est utilisé pour gérer et planifier l'utilisation des casiers du réseau.

Pour les casiers qui sont installés dans des zones couvertes par un réseau de communication, par exemple un réseau cellulaire de type M2M, il est prévu une communication électronique du système de gestion SI avec tout ou partie des ses casiers en zone couverte, lesquels sont alors muni en outre d'un équipement de communication adapté. Cela peut être le cas par exemple de casiers situés dans des zones de passage intensif, ou d'environnement difficile. L'usage de cette communication à distance peut aussi être limité à certaines fonctions, par exemple à certains services ou à la maintenance et le suivi d'exploitation.

Dans le présent exemple, le casier illustré est situé dans une zone d'ombre ZO et n'est par exemple pas équipé de moyen de communication à distance, en particulier pas avec le système de gestion SI.

Le système de gestion SI communique avec les utilisateurs, par exemple des individus quelconques qui se trouvent occasionnellement clients en tant que destinataires ou expéditeurs de colis, ici aussi appelés "clients". Cette communication se fait avec une application embarquée AP installée sur le téléphone TPU d'un tel utilisateur UTI.

### Livraison jusqu'au conteneur

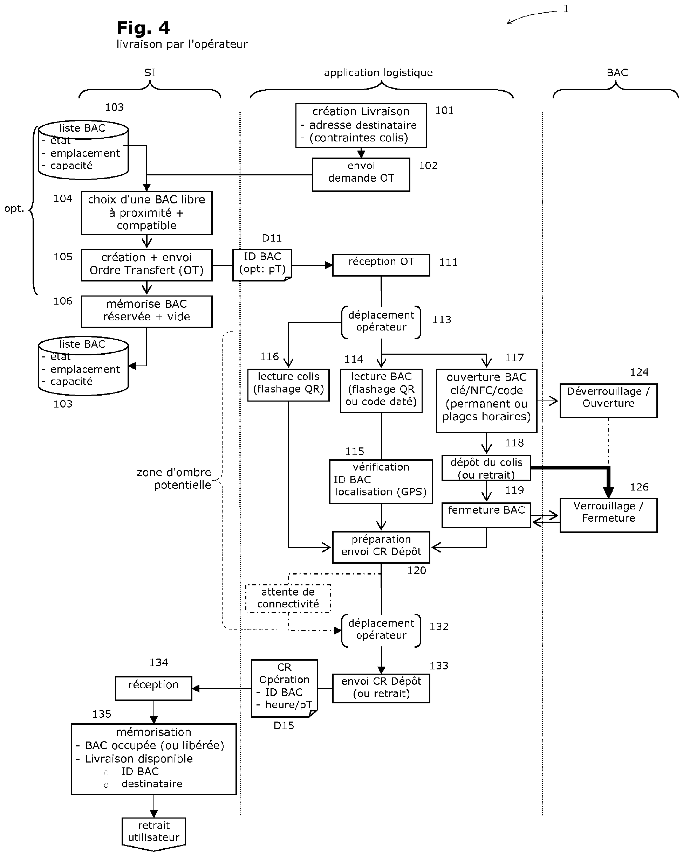

Comme illustré en FIGURE 1 et FIGURE 4, dans le cas d'un colis COL à livrer à ce destinataire UTI, l'opérateur logistique crée 101 sur son ordinateur une demande de livraison, en précisant l'adresse du destinataire et si besoin les contraintes liées au colis à livrer.

Il envoie 102 alors un message électronique au système de gestion SI, sous la forme d'une demande d'opération de transfert.

A partir des informations de sa base de données 103 contenant l'état, l'emplacement et la capacité des différents conteneurs du réseau qu'il gère, le système SI choisit 104 un conteneur BAC qui est libre et compatible à proximité de l'adresse de l'utilisateur destinataire. Il crée alors un ordre de transfert OT qu'il envoie 105 sous la forme d'un message électronique D11 contenant l'identifiant ID BAC et/ou l'emplacement du conteneur choisi. Il envoie ce message D11 à l'opérateur logistique, par exemple directement sur le terminal TPL d'un livreur LOG parmi ses agents logistiques. Le système SI va alors mémoriser 106 dans la base de données 103 le fait que ce conteneur BAC spécifique est réservé pour cette opération.

Lorsqu'il reçoit 111 l'ordre de transfert D11 sur l'application de son terminal, par exemple un téléphone intelligent TPL, le livreur LOG se déplace 113 jusqu'au conteneur concerné. Son opération de transfert comprend les opérations suivantes :
- enregistrer le colis dans son application, par exemple par lecture 116 optique d'un code graphique, par exemple par "flashage" d'un "QR-code" ;
- enregistrer l'identifiant par lecture 114 d'un code graphique affiché sur le conteneur (par exemple une inscription permanente ou un code affiché sur un écran et pouvant représenter l'instant présent), dont l'application va vérifier 115 la validité avec l'ordre de transfert D11 reçu et avec la localisation géographique relevée par le GPS du terminal ;
- commander 117 l'ouverture du conteneur, par exemple par une clé, ou par communication locale sans fil, ou par un code d'agent (qui peut être permanent ou valide par plages horaires). Optionnellement, l'ordre de transfert peut aussi comporter une plage temporelle ou horaire qui sera vérifiée par la serrure du conteneur, de façon identique ou similaire la vérification effectuée pour un client utilisateur ;

Une fois que le conteneur est ouvert 124, le livreur LOG dépose 118 le colis dans le casier.

Dans le cas d'une communication sans fil, l'information de fermeture ou de verrouillage 126 du casier est transmise à l'application du livreur.

A partir de ces différentes informations, cette application prépare 120 un message de compte rendu D15 et commande son envoi 133 au système de gestion SI. Si l'opération de transfert est réalisée dans une zone d'ombre, cet envoi est programmé pour se faire 133 automatiquement dès que le déplacement 132 du livreur l'amène dans une zone connectée.

A réception 134 de ce compte-rendu D15, le système SI enregistre 135 la réalisation de l'opération de transfert. Il mémorise alors le changement d'état du conteneur, et commande l'opération suivante.

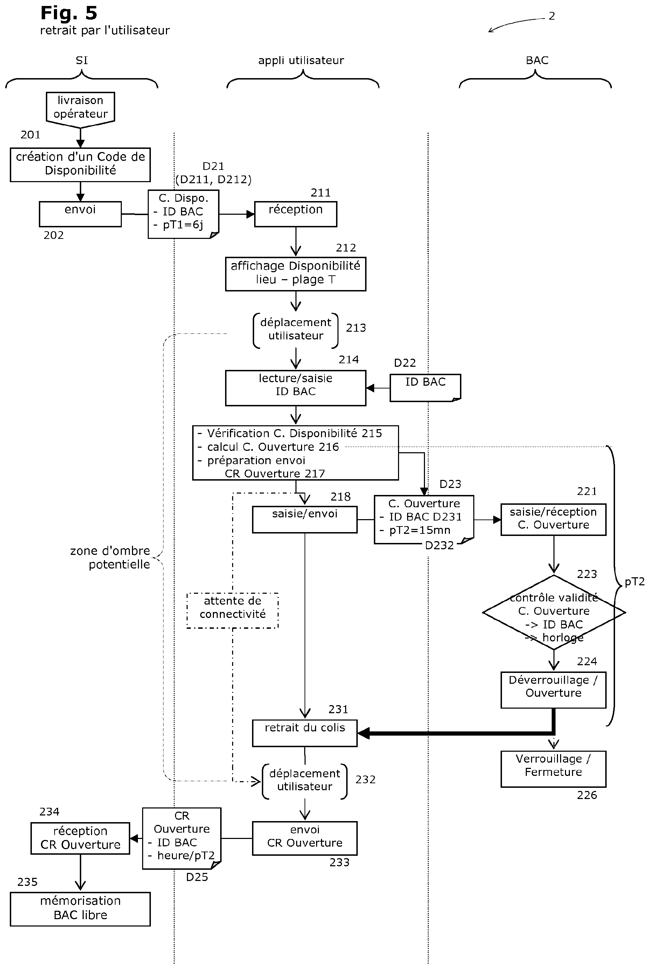

Dans le cas d'une livraison (FIGURE 1), il mémorise que le conteneur est occupé, et lance alors une opération de transfert de type retrait telle qu'illustrée en FIGURE 2 et FIGURE 5.

### Retrait par l'utilisateur

Pour qu'un colis soit remis à son destinataire, par exemple après une opération de dépôt telle que écrit plus haut, le système SI délivre au destinataire une autorisation d'accès à la boite-conteneur, fournie en deux étapes dans un mode de réalisation préférée :
1ère étape : le destinataire reçoit un message de l'opérateur lui signifiant la livraison de son colis et la possibilité de le retirer sous un délai d'un certain nombre de jours, ainsi qu'un code « invisible » valable lui aussi ce même nombre de jours, conservée par l'application client (Code de disponibilité).
2ème étape : Au moment où le destinataire se rend face à la boite à colis, il doit utiliser son application pour identifier la boite (par exemple en flashant le QR-code de la boite ou entrée manuelle du code ID de la boite ou tout autre moyen d'identification).

En réponse, l'application valide alors l'autorisation accordée en vérifiant la cohérence « Identité de la boite / Code de disponibilité » et rend visible pour le client le code d'ouverture à usage unique.

La génération du code d'accès par l'application entraîne, par action automatique un retour d'information vers l'opérateur, attestant du retrait du colis et de la nouvelle disponibilité de la boite.

Ainsi, l'accès à la boite est possible même en cas de non couverture de la boite par un réseau mobile : en effet, une fois reçu le code de disponibilité, la génération du code d'ouverture s'opère indépendamment de tout connectivité. La remontée de l'information vers l'opérateur se fait au moment où le smartphone retrouve une connexion, par exemple lors d'un déplacement ultérieur du client.

En FIGURE 2 et FIGURE 5 est illustré plus en détail le processus de retrait du colis COL par le client/utilisateur UTI.

En 201, le système de gestion SI crée un "code disponibilité" D21, valable pour cette livraison et pour une plage temporelle de disponibilité pT1, typiquement les 6 prochains jours. Ce code D21 comprend ainsi une donnée D211 d'identification ID BAC du conteneur BAC, ainsi qu'une donnée D212 représentant la plage temporelle de disponibilité pT1.

L'application mobile du terminal TPU de l'utilisateur reçoit 211 et mémorise le "code disponibilité", et affiche 212 le lieu de la consigne à destination de l'utilisateur. Le client peut ainsi se déplacer 213 jusqu'au conteneur BAC.

Une fois que le client est auprès du conteneur :
- le client lit le code d'identification ID BAC affiché sur le conteneur et l'entre 214 dans l'application, soit par lecture automatique d'un code barre, soit par saisie manuelle au clavier.
- l'application vérifie l'opération : en comparant 215 le code d'identification de conteneur D22 entré avec le code d'identification de conteneur D211 inclus dans le code disponibilité D21, et en vérifiant 216 que l'instant présent est compris dans la plage temporelle de disponibilité pT1.
- Si tout est conforme, l'application mobile effectue alors les opérations suivantes, de préférence de façon atomique :
   o préparation et affichage 217 un code d'ouverture D23, comprenant une donnée de plage temporelle D232 agencée pour être valable pour une plage temporelle d'ouverture pT2, typiquement comprise dans la plage temporelle de disponibilité pT1 et inférieur d'au moins un facteur 10 voire 20, par exemple les 15 prochaines minutes. De préférence, le code d'ouverture D23 comprend aussi une donnée d'identification de conteneur D231 ;
   o préparation et mise en route D217 d'un envoi d'un message de compte-rendu D25 à destination du système de gestion SI. Si le terminal TPU n'est pas connecté, ce message est mis en attente de façon à être automatiquement envoyé 233 dès que le terminal sera à nouveau connecté, par exemple dès qu'un déplacement 232 de l'utilisateur aura permis de rétablir la connectivité. De préférence, le message est mémorisé par l'application au sein du système d'exploitation, afin qu'il soit envoyé même si l'application a été fermée entretemps.
- le client entre 218 le code d'ouverture D232 dans la serrure du conteneur, par exemple par saisie manuelle sur le clavier de la serrure.
- la serrure du conteneur vérifie 223 la validité du code d'ouverture D23 qu'elle a reçu 221 :
   ∘ en comparant la donnée d'identification D231 reçue avec des données issues de sa mémoire, pour vérifier que ce code D23 correspond bien au conteneur et qu'il n'a pas déjà été utilisé. Elle mémorise alors l'utilisation de ce code de façon à ce qu'il ne soit pas réutilisable ;
   ∘ en comparant la donnée de plage temporelle D232 reçue avec l'instant présent ou avec une donnée calculée à partir de l'instant présent, typiquement par lecture d'une horloge interne.
- si la vérification 223 indique une validité du code d'ouverture D23, la serrure libère l'accès au contenu du casier concerné par le code d'ouverture, par exemple en en ouvrant ou déverrouillant la porte.
- la serrure garde alors le conteneur ouvert et/ou déverrouillé le temps nécessaire pour que l'utilisateur puisse retirer le colis qu'il contient, par exemple jusqu'à détection de l'ouverture de la porte, ou jusqu'à détection du retrait du colis par exemple par un capteur de proximité ou une balance, ou pendant une durée déterminée pouvant être égale ou non à la durée de la plage temporelle d'ouverture pT2 ou à la plage temporelle qui en subsiste.

Dans ce mode de réalisation, on notera que les ouvertures et/ou fermetures du conteneur ne déclenchent pas les envois d'informations.

Une fois que le message de compte-rendu D25 a été préparé 217 et que l'application utilisateur détecte la présence d'une connexion possible au réseau, le terminal utilisateur TPU transmet 233 ce message D25 au système de gestion SI.

A réception 234, ce dernier SI peut prend en compte le fait que le code d'ouverture D23 a effectivement été demandé 214 à l'utilisateur et lui a été fourni 216, et considère que ces opérations signifient que l'ensemble de l'opération de retrait a été réalisée complètement.

Il mémorise 235 alors ce retrait comme effectif, et le fait que le conteneur BAC est maintenant vide et disponible pour une nouvelle opération.

### Nouveau retrait pour le même colis :

Dans le cas où l'utilisateur n'a pas retiré le colis du conteneur, malgré la fourniture du code d'ouverture D23, il est optionnellement prévu une possibilité de nouveau retrait, par exemple selon les étapes suivantes (non représentées spécifiquement aux figures).

De retour en zone couverte, l'utilisateur demande au système de gestion SI à recommencer son retrait, par l'intermédiaire de son application utilisateur.

Le système de gestion SI vérifie si le casier du conteneur a été réservé pour une autre opération de transfert, par exemple la livraison d'un autre colis.
- Si le casier n'a pas été réservé : il envoie à l'application utilisateur une autorisation pour délivrer un nouveau code ouverture, par exemple sous la forme d'un nouveau code de disponibilité.
- Si le casier a été réservé :
   ∘ le système de gestion vérifie s'il est matériellement possible que le livreur ait déjà ouvert le caisson, par exemple en vérifiant si un nouveau livreur a déjà demandé un code d'ouverture pour dépôt, ou pour quelle plage horaire ou temporelle ce livreur a obtenu un code de dépôt, ou dans quelle plage horaire le livreur a prévu de déposer le nouveau colis si l'information est fournie par l'application mobile logistique ;
   ∘ si cette vérification indique que le casier n'a pas encore été ouvert par le nouveau livreur, et ne le sera pas avant un délai déterminé suffisant pour permettre à l'utilisateur UTI précédent de revenir au conteneur BAC et réessayer son retrait 231, alors le système de gestion SI envoie à l'application utilisateur une autorisation pour délivrer un nouveau code d'ouverture dans une nouvelle plage de disponibilité pT1 se terminant avant l'instant prévu pour le nouveau dépôt par le nouveau livreur.

Typiquement, dans le cas où le colis COL est toujours dans le casier du conteneur BAC lorsqu'un agent logistique arrive pour en déposer un nouveau, alors cet agent logistique récupère le colis et le traite comme non remis au destinataire, par exemple selon des procédures connues.

### Envoi par l'utilisateur

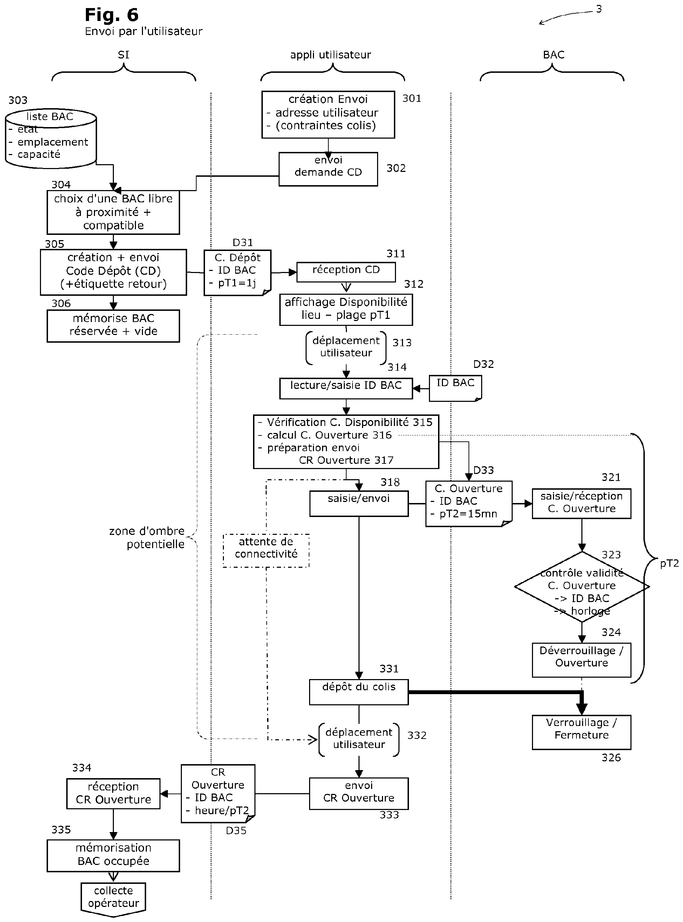

Comme illustré en FIGURE 3 et FIGURE 6, le système et les conteneurs sont aussi agencés pour pouvoir utiliser les conteneurs pour collecter un colis en provenance d'un client/utilisateur UTI, possiblement non professionnel là aussi, muni d'un terminal exécutant une application utilisateur qui peut être la même que pour le retrait. Le processus est similaire à celui du retrait décrit ci-dessus, et sera décrit dans ses différences.

Si le client est abonné à un service de retour colis proposé par l'opérateur, ou a reçu un accord pour un retour par un opérateur logistique, il crée 301 et émet 302 une demande d'envoi en précisant une adresse déterminée, et optionnellement en précisant des contraintes liées au colis à envoyer.

Si le système de gestion SI accepte cette demande, il choisit 303, 304 un conteneur BAC disponible et adapté à proximité de l'adresse précisée, et adresse à l'utilisateur un code de dépôt D31 comprenant l'identification du conteneur choisi ainsi qu'une plage de disponibilité pT1, par exemple d'une journée, possiblement assorti d'une étiquette de retour.

A réception 311, l'application utilisateur affiche 312 le lieu du conteneur et sa plage de disponibilité pT1, ce qui permet à l'utilisateur de s'y rendre 313.

De façon similaire au retrait, l'utilisateur UTI entre 314 le code conteneur D22, qui déclenche sa vérification 315 vis-à-vis du code de dépôt D31 et de l'instant présent. En cas de validité, l'application fournit 316 un code d'ouverture D33 avec identification ID BAC et plage d'ouverture pT2, et prépare 317 son message de compte-rendu D35.

L'utilisateur entre 318 le code d'ouverture D33 dans la serrure du conteneur, qui le vérifie 323 et autorise l'accès 323.

Une fois que l'utilisateur a déposé 331 son colis dans le casier du conteneur, par exemple sur une action ou saisie de sa part ou après détection que la porte a été refermée, la serrure verrouille 326 l'accès au contenu du casier.

Dès détection d'une connectivité, par exemple après un nouveau déplacement 332 de l'utilisateur, son terminal TPU envoie 333 le message de compte-rendu D35 au système de gestion SI, qui le mémorise comme signifiant que le dépôt 331 a été effectué.

Le système SI mémorise 335 alors que le conteneur est occupé, et lance un processus de collecte de ce colis, par exemple par un livreur LOG. Cette collecte se fait par exemple selon le même processus que la livraison illustrée en FIGURE 1 et FIGURE 3, en réalisant un transfert 118 par retrait du colis au lieu d'un dépôt. A l'issue de la collecte, le système SI mémorise alors que le conteneur est vide et disponible pour une nouvelle opération.

### Deuxième exemple de mode de réalisation

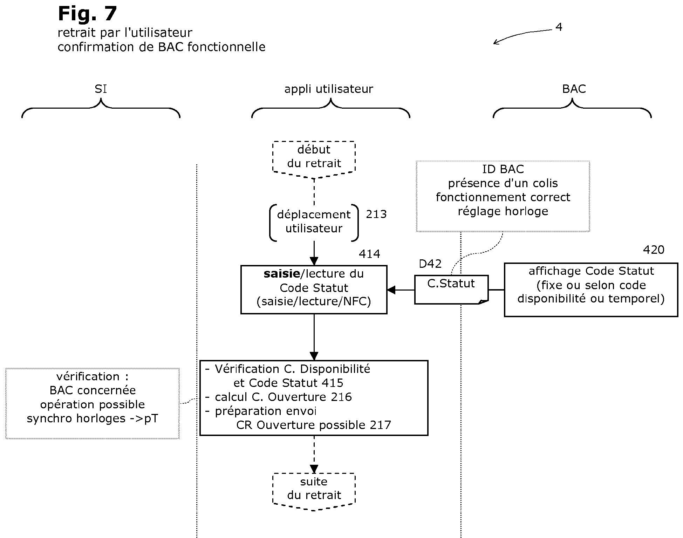

La FIGURE 7 illustre un deuxième exemple de mode de réalisation de l'invention, qui ne sera décrit que dans ses différences.

Dans ce mode de réalisation, le conteneur BAC comprend un affichage commandé par le contrôleur de la serrure, par exemple un écran d'affichage, par exemple graphique pouvant afficher un code à lecture automatique tel qu'un code barre ou un code QR, ou simplement un code alphanumérique. En permanence, ou sur déclenchement par une action extérieur telle qu'un bouton d'activation ou une détection d'une communication local par exemple sans fil, le contrôleur calcule et affiche un code de statut D42, qui représente un ou plusieurs paramètres ou états du conteneur.

Ce code statut comprend par exemple une donnée indiquant si le conteneur fonctionne correctement, par exemple concernant le contrôleur, la serrure et/ou la porte d'un ou plusieurs casiers, où une donnée s'il contient un objet dans le cas où il est équipé de moyens de détection du contenu du casier, ou une donnée représentant l'état d'horodatage actuel d'une horloge de son contrôleur, une donnée identifiant ce conteneur ou l'un de ses casiers, ou une combinaison de ces éléments.

Dans une procédure de retrait par un utilisateur UTI, à l'issue de son déplacement 213 auprès du conteneur BAC, l'utilisateur UTI entre 414 ce code statut D42 dans l'application utilisateur de son terminal portable TPU, par exemple par saisie manuelle ou par lecture automatique à l'aide de d'appareil photo de son terminal. L'étape de réception 414 du code de conteneur par l'application utilisateur comprend ainsi une utilisation dudit code de statut D42 en tant que tout ou partie du code conteneur ;

L'application utilisateur utilise alors le contenu de ce code statut D42 pour vérifier 415 la validité du code disponibilité D21 vis-à-vis de ce conteneur, mais aussi pour vérifier si le retrait peut s'effectuer correctement, typiquement pour vérifier que le conteneur est le bon et qu'il est fonctionnel. Cette vérification complémentaire permet par exemple de mémoriser le fait que le conteneur est en panne, ou que son horloge est mal réglée et risque donc de ne pas reconnaître la validité du code d'ouverture D23 qui lui sera fourni.

Si cette vérification 415 est satisfaisante, l'application utilisateur calcule et fournit 216 un code d'ouverture D23 et prépare l'envoi 233 d'un message de compte-rendu D25 la même façon que précédemment décrit.

Dans ce mode de réalisation, le message de compte-rendu D25 comprend en outre des informations issues du code statut D42 fourni par le conteneur, et représente une information d'ouverture possible qui représente une vérification (415) satisfaisante du code de statut (D42) fourni par le conteneur. Pour le système de gestion SI, la réception 234 de ce message de compte-rendu D25 est alors analysée et mémorisée en fonction de ces informations complémentaires.

Si son contenu indique que le code d'ouverture D23 a effectivement été fourni à l'utilisateur, cela apporte une certitude complémentaire que l'ouverture était matériellement possible du point de vue du conteneur. Dans le cas contraire, une opération de maintenance est par exemple programmée ou déclenchée en fonction de ces données D42.

Optionnellement, par exemple lors d'une opération de nouveau retrait pour le même colis si le conteneur ne s'est pas ouvert lors d'un premier essai, l'application utilisateur calcule et intègre dans son code d'ouverture D23 une donnée supplémentaire de resynchronisation contenant l'horodatage du terminal utilisateur TPU, à usage unique ou de façon permanente, par exemple authentifiée par un code d'authentification fourni par le système de gestion SI lors d'une demande de nouveau retrait. Le conteneur interprète alors cette donnée comme une commande de forçage, et utilise par exemple la valeur de l'horloge cette donnée de resynchronisation pour recaler sa propre horloge avant de vérifier la validité du code d'ouverture D23 reçu pour l'instant présent.

Cette procédure de resynchronisation est mise en oeuvre par exemple si le code statut D42 du conteneur indique à l'application utilisateur que l'horloge du conteneur est déréglée, mais possiblement aussi à titre de tentative en aveugle, dans d'autres modes de réalisation pour un conteneur qui n'émet pas de code statut.

### Troisième exemple de mode de réalisation

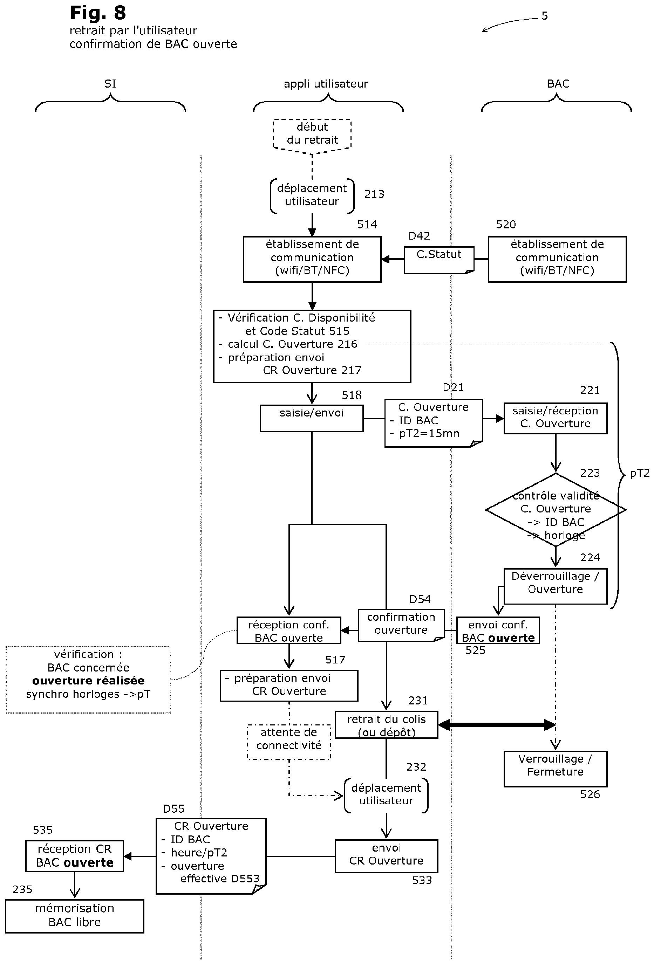

La FIGURE 8 illustre un troisième exemple de mode de réalisation de l'invention, qui ne sera décrit que dans ses différences.

Dans ce mode de réalisation, le conteneur BAC comprend un équipement de communication électronique locale par exemple sans fil, permettant au contrôleur de la serrure du conteneur de communiquer avec l'application mobile utilisateur AP du terminal portable TPU de l'utilisateur UTI, par exemple selon une norme Wifi ou Bluetooth, ou par champ proche (NFC), voire par communication optique (IR) ou par contact électrique telle que selon une norme USB.

Dans ce mode de réalisation, lorsque l'utilisateur arrive auprès du conteneur à l'issue de son déplacement 213, sa demande 514 de code d'ouverture comprend un établissement d'une telle communication électronique locale 520, au moins unidirectionnelle mais possiblement bidirectionnelle.

De façon similaire au deuxième mode de réalisation, le conteneur envoie à l'application utilisateur un code statut D42, l'application utilisateur vérifie 515 le code de disponibilité en fonction de lui. Si la vérification est satisfaisante, elle fournit 216 un code d'ouverture D23 et prépare 217 l'envoi 533 du message de compte-rendu D55.

De préférence, l'application envoie directement 518 le code d'ouverture D23 au conteneur.

L'étape de commande d'ouverture 224 par le conteneur est suivie par une étape d'envoi 525, au travers de ladite communication électronique depuis le conteneur vers l'application utilisateur, d'un message D54 contenant au moins une donnée de conteneur ouvert, qui représente un état de conteneur ouvert.

L'étape de préparation 517 d'un message de compte-rendu d'opération D55, par l'application utilisateur, comprend alors une inclusion dans ledit message D55 d'une donnée d'ouverture réalisée D553 qui représente l'accomplissement de l'étape 224 de déverrouillage ou ouverture du conteneur.

A réception 535 du message de compte-rendu D55 par le système de gestion SI, si son contenu indique que le message de conteneur ouvert D54 a effectivement été reçu par l'application l'utilisateur, cela apporte une certitude complémentaire que l'utilisateur a effectivement pu retirer 231 le colis du conteneur.

Optionnellement, pour le troisième mode de réalisation mais possiblement aussi pour les autres modes de réalisation, le conteneur comprend un ou plusieurs détecteur de présence agencé pour détecter la présence d'un objet dans le volume du casier commandé, ou d'un changement d'état entre un état vide et un état contenant un objet (COL).

La détection d'un tel changement d'état déclenche alors un envoi, depuis le conteneur vers l'application utilisateur, d'une donnée de transfert effectué représentant l'accomplissement par l'utilisateur d'un transfert d'objet depuis ou vers le conteneur. Cette donnée de transfert effectué est incluse dans le message de compte-rendu d'opération (D55), et apporte une certitude complémentaire au système de gestion SI.

Bien sûr, l'invention n'est pas limitée aux exemples qui viennent d'être décrits et de nombreux aménagements peuvent être apportés à ces exemples sans sortir du cadre de l'invention.

## Revendications

1. Procédé de gestion d'acheminement logistique d'un ou plusieurs objets, notamment pour distribution ou collecte, par au moins un opérateur logistique auprès d'une pluralité d'utilisateurs (UTI),
comprenant au moins une opération de transfert d'un objet (COL) par dépôt puis retrait dudit objet dans un conteneur de dépôt (BAC) dont l'accès au contenu est commandé par une serrure à commande par contrôleur électronique,
ladite opération de transfert d'un objet déterminé étant réalisée par un utilisateur (UTI) déterminé,
**caractérisé en ce qu'**il comprend les étapes suivantes :
- envoi (202), par un système informatique de gestion (SI), d'un message électronique de disponibilité à un terminal portable informatisé (TPU) équipant ledit utilisateur, communiquant ou apte à communiquer avec un réseau de communication sans fil (RC) et qui exécute au moins une application mobile utilisateur apte à recevoir ledit message, ledit message comprenant un code de disponibilité (D21) calculé pour représenter au moins une identification d'un conteneur déterminé pour ladite opération de transfert ;
- réception (211) dudit message électronique de disponibilité par ledit terminal portable informatisé (TPU), et affichage ou émission à destination de l'utilisateur d'une information représentant au moins une identification dudit conteneur ;
- à l'issue d'un déplacement (213) dudit utilisateur jusqu'à portée dudit conteneur, réception (214, 414) par l'application utilisateur d'un code de conteneur (D22) représentant ledit conteneur, par saisie manuelle par l'utilisateur ou lecture électronique d'un code (ID BAC) figurant sur le conteneur concerné par l'opération de transfert, ou par communication électronique locale du terminal avec ledit conteneur, créant ainsi pour l'utilisateur la nécessité d'être présent ou à portée immédiate dudit conteneur ;
- vérification (215) optionnelle que ledit code de conteneur (D22) correspond bien au conteneur concerné par l'opération de transfert, par comparaison avec le code de disponibilité (D21), permettant la continuation de l'opération en cas de correspondance ;
- fourniture (216), réalisée par l'application utilisateur sans nécessiter de communiquer avec le réseau, d'un code d'ouverture (D23) calculé au moins à partir du code de disponibilité (D21) et représentant au moins :
∘ une identification dudit conteneur (BAC), et
∘ une plage temporelle d'ouverture (pT2), déterminée pour être postérieure à l'instant présent et pour donner à l'utilisateur un temps suffisant pour réaliser son opération, notamment dans des conditions normales ;
- préparation (217), par l'application utilisateur, d'un message de compte-rendu d'opération (D25) comprenant au moins une donnée d'ouverture demandée, qui représente l'accomplissement de l'étape de fourniture (216) du code d'ouverture ;
- après détection d'une connectivité du terminal portable utilisateur (TPI) avec le réseau de communication sans fil, possiblement après déplacement (232) de l'utilisateur, envoi (233) automatique dudit message de compte-rendu d'opération (D25) depuis le terminal portable utilisateur (TPU) vers le système informatique de gestion (SI), sans nécessiter d'intervention de l'utilisateur ; et
- mémorisation (235) par ledit système informatique de gestion (SI) d'au moins une donnée représentant l'accomplissement de l'opération de transfert par l'utilisateur ;
et **en ce qu'**il comprend en outre les étapes suivantes :
- réception (221) du code d'ouverture (D23) par le conteneur (BAC) depuis l'utilisateur par saisie manuelle ou depuis l'application ;
- détermination par le conteneur d'une plage temporelle d'ouverture (pT2), par la serrure électronique à partir du code d'ouverture, par extraction (D212) d'une donnée temporelle (D232) à partir du code d'ouverture (D23) ou par calcul à partir de l'instant de réception dudit code d'ouverture ; et
- vérification (223) par le conteneur de la validité dudit code d'ouverture (D23), comprenant au moins :
∘ une vérification que l'instant présent est bien inclus dans la ladite plage temporelle d'ouverture, et
∘ si cela n'a pas été fait précédemment (215) par l'application utilisateur, une vérification que ledit code d'ouverture (D23) correspond bien au conteneur concerné par l'opération de transfert, par comparaison avec une identification mémorisée dans ledit conteneur ;
- si ladite vérification indique que ledit code d'ouverture est valide, commande (224) d'ouverture ou de déverrouillage dudit conteneur de façon à donner accès audit objet (COL).

2. Procédé selon la revendication précédente, **caractérisé en ce qu'**il comprend en outre les étapes suivantes, réalisées par l'application utilisateur sans nécessiter de communiquer avec le réseau :
- détermination d'une plage temporelle de disponibilité (pT1), à partir du message de disponibilité, par extraction (D212) à partir du code de disponibilité (D21) ou par calcul à partir d'un horodatage dudit message de disponibilité ; et
- vérification (215) de la validité du code de disponibilité, comprenant au moins une vérification que l'instant présent est inclus dans ladite plage temporelle de disponibilité ;
et **en ce que** ladite vérification de validité (215) conditionne la fourniture (216) du code d'ouverture (D23).

3. Procédé selon l'une quelconque des revendications précédentes, **caractérisé en ce que** la vérification de validité (215, 223) du code de disponibilité (D21) ou du code d'ouverture (D23) ou des deux comprend une vérification de l'identité d'un émetteur dudit code, par décryptage et/ou comparaison d'une donnée de signature électronique.

4. Procédé selon l'une quelconque des revendications précédentes, **caractérisé en ce que** la vérification de validité (215, 223) du code de disponibilité (D21) ou du code d'ouverture (D23) ou des deux est agencée pour permettre une unique utilisation dudit code.

5. Procédé selon l'une quelconque des revendications précédentes, **caractérisé en ce que** :
- la plage temporelle d'ouverture (pT2) se termine au bout d'une durée comprise entre 1 mn et 30 mn après la fourniture (216) du code d'ouverture (D23), et notamment comprise entre 5 mn et 20 mn ; et
- la plage temporelle de disponibilité, lorsqu'elle existe, se termine au bout d'une durée comprise entre 1 jour et 10 jours après l'envoi du code de disponibilité la fourniture (202) du code de disponibilité (D21), et notamment comprise entre 2 jours et 6 jours.

6. Procédé (4) selon l'une quelconque des revendications précédentes, **caractérisé en ce que**
- le conteneur (BAC) calcule et affiche (420), en permanence ou en réponse à une action de l'utilisateur (UTI) ou de l'application utilisateur de son terminal (TPU), au moins un code de statut (D42) représentant un ou plusieurs états dudit conteneur à l'instant présent, parmi les états suivants :
∘ une identification univoque d'un ou plusieurs volumes de dépôt commandés au sein dudit conteneur,
∘ un niveau de capacité de fonctionnement d'un ou plusieurs de ses composants,
∘ un état d'occupation d'un ou plusieurs volumes de dépôt commandés au sein dudit conteneur, et
∘ un état ou une valeur d'une horloge qu'il utilise pour vérifier la validité des codes d'ouverture (D23) qu'il reçoit ;
- l'étape de réception (414) du code de conteneur par l'application utilisateur comprend une utilisation dudit code de statut (D42) en tant que tout ou partie du code conteneur ;
- l'étape de vérification d'identification du conteneur est réalisée (415) par l'application utilisateur, et inclut en outre une vérification que le code de statut (D42) reçu correspond à un état acceptable pour la poursuite de l'opération de transfert ;
- le compte-rendu d'opération (D25) préparé (217) par l'application utilisateur comprend en outre au moins une donnée d'ouverture possible, qui représente une vérification (415) satisfaisante du code de statut (D42) fourni par le conteneur.

7. Procédé (5) selon l'une quelconque des revendications précédentes, **caractérisé en ce que** :
- l'étape de réception (514) du code de conteneur (D42) par l'application utilisateur comprend un établissement d'une communication électronique (520) au moins depuis le conteneur vers ladite application utilisateur ;
- l'étape de commande d'ouverture (224) par le conteneur est suivie par une étape d'envoi (525), au travers de ladite communication électronique depuis le conteneur vers l'application utilisateur, d'au moins une donnée de conteneur ouvert (D54) représentant un état de conteneur ouvert ;
- l'étape de préparation (517) d'un message de compte-rendu d'opération (D55), par l'application utilisateur, comprenant alors une inclusion dans ledit message d'une donnée d'ouverture réalisée (D553) qui représente l'accomplissement de l'étape (224) de déverrouillage ou ouverture du conteneur.

8. Procédé selon la revendication précédente, **caractérisé en ce qu'**il comprend en outre une étape de détection, par le conteneur, d'un changement d'état d'au moins un volume de dépôt entre un état vide et un état contenant un objet (COL) ;
laquelle déclenche un envoi, depuis le conteneur vers l'application utilisateur, d'une donnée de transfert effectué représentant l'accomplissement par l'utilisateur d'un transfert d'objet depuis ou vers le conteneur ;
laquelle donnée de transfert effectué est incluse dans le message de compte-rendu d'opération (D55).

9. Procédé selon l'une quelconque des revendications précédentes, **caractérisé en ce qu'**il comprend :
- une opération de transfert (1) selon l'une quelconque des revendications précédentes, comprenant un dépôt (118) dans le conteneur (BAC), par un agent de livraison (LOG) pour le compte de l'opérateur logistique, d'un objet (COL) provenant d'un centre de distribution logistique, notamment un colis ; et
- de façon ultérieure, une opération de transfert (2, 4, 5) selon l'une quelconque des revendications précédentes, comprenant un retrait (231) dudit objet (COL) par l'utilisateur (UTI).

10. Procédé selon la revendication précédente, **caractérisé en ce que** l'opération (1) de transfert par dépôt comprend les étapes suivantes :
- envoi (105), par le système informatique de gestion (SI) d'un message électronique (D11) vers un terminal portable informatisé (TPL) équipant l'agent de l'opérateur logistique, communiquant ou apte à communiquer avec un réseau de communication sans fil et qui exécute au moins une application mobile logistique apte à recevoir ledit message, ledit message comprenant une donnée représentant un ordre de transfert (OT), calculé pour représenter au moins une identification de l'opération de dépôt à effectuer ;
- à l'issue d'un déplacement (113) dudit agent logistique jusqu'à portée dudit conteneur, réalisation des phases suivantes, dans cet ordre ou dans un autre :
∘ réception (116) par l'application logistique, notamment par lecture électronique et/ou saisie manuelle et/ou communication électronique avec l'objet, d'un code de colis identifiant l'objet (COL) et/ou l'opération de dépôt,
∘ réception (114) par l'application logistique, notamment par lecture électronique et/ou saisie manuelle et/ou communication électronique avec l'objet, d'un code de conteneur identifiant le conteneur (BAC),
∘ dépôt (118) de l'objet (COL) dans un volume de dépôt dudit conteneur,
∘ préparation (120), par l'application logistique, d'un message de compte-rendu d'opération (D15) comprenant au moins une donnée de dépôt effectué, qui représente l'accomplissement de l'opération de transfert par dépôt ;
- après détection d'une connectivité du terminal portable logistique (TPL) avec le réseau de communication sans fil, possiblement après déplacement (132) de l'agent logistique, envoi (133) dudit message de compte-rendu d'opération (D15) depuis ledit terminal portable logistique vers le système informatique de gestion (SI), ; et
- mémorisation (135) par ledit système informatique de gestion (SI) d'au moins une donnée représentant un accomplissement de l'opération de transfert par dépôt.

11. Procédé selon l'une quelconque des revendications 1 à 8, **caractérisé en ce que** l'opération de transfert (3) comprend un dépôt (331) par l'utilisateur (UTI) d'un objet (COL) dans le conteneur (BAC), notamment un colis, et **en ce qu'**il comprend ultérieurement une collecte dudit objet par un agent de collecte (LOG) pour le compte de l'opérateur logistique.

12. Procédé de traitement de données numériques, mis en oeuvre par un terminal portable informatisé de téléphonie (TPU), comprenant une exécution d'instructions de programme réalisant les opérations de l'application mobile (AP) au sein d'un procédé (1, 2, 3, 4, 5) selon l'une quelconque des revendications précédentes.

13. Procédé de traitement de données numériques, comprenant
- d'une part une exécution, par un ou plusieurs ordinateurs communiquant avec un réseau de téléphonie sans fil (RC), d'instructions de programme réalisant les opérations du système informatique de gestion (SI) au sein d'un procédé (1, 2, 3, 4, 5) selon l'une quelconque des revendications 1 à 11; et
- d'autre part une exécution, par une serrure électronique commandant l'accès au contenu d'un ou plusieurs conteneurs, d'instructions de programme réalisant les opérations du conteneur de dépôt (BAC) au sein d'un procédé selon l'une quelconque des revendications 1 à 11.

14. Système informatique (SI) programmé pour réaliser les opérations d'un procédé selon la revendication 13.

15. Conteneur de dépôt (BAC) comprenant un ou plusieurs volumes de dépôt (B1) dont l'accès au contenu est commandé par une serrure à commande par contrôleur électronique (B4), lequel est programmé pour réaliser les opérations du conteneur d'un procédé selon la revendication 13.

## Patentansprüche

1. Verfahren zur Verwaltung logistischer Beförderung, insbesondere Zustellung oder Abholung, eines Objekts oder mehrerer Objekte durch mindestens einen Logistikbetreiber bei einer Vielfalt von Benutzern (UTI),
umfassend wenigstens einen Vorgang zur Überführung eines Objekts (COL) durch Ablage dann Entnahme eines Objekts in bzw. aus einem Ablagebehälter (BAC), dessen Zugang zu Inhalten über ein elektronisch gesteuertes Schloss gesteuert ist,
wobei der Überführungsvorgang eines bestimmten Objekts durch einen bestimmten Benutzer (UTI) ausgeführt wird,
**dadurch gekennzeichnet, dass** es folgende Schritte umfasst:
- Senden (202) einer elektronischen Verfügbarkeitsnachricht durch ein Verwaltungs-Datenverarbeitungssystem (SI) an ein computergestütztes, tragbare Endgerät (TPU), mit welchem der Benutzer ausgestattet ist und welches mit einem drahtlosen Kommunikationsnetz (RC) kommuniziert oder dazu geeignet ist und welches mindestens eine, zum Empfang dieser Nachricht geeignete, mobile Benutzer-Anwendung ausführt, wobei diese Nachricht einen Verfügbarkeitscode (D21) umfasst, der zur Darstellung mindestens einer Identifizierung eines für den Überführungsvorgang bestimmten Behälters berechnet ist;
- Empfang (211) der elektronischen Verfügbarkeitsnachricht durch das computergestützte, tragbare Endgerät (TPU) und Anzeige oder Ausgabe an den Benutzer einer Information, die mindestens eine Identifizierung des Behälters darstellt;
- nach einer Bewegung (213) des Benutzers bis zur Reichweite des Behälters, Empfang (214, 414) durch die Benutzer-Anwendung eines den Behälter darstellenden Behältercodes (D22) durch manuelle Eingabe durch den Benutzer oder durch elektronische Ablesung eines Codes (ID BAC) auf dem von dem Überführungsvorgang betroffenen Behälter oder durch örtliche, elektronische Kommunikation des Endgeräts mit dem Behälter, wobei sich damit für den Benutzer die Notwendigkeit ergibt, anwesend zu sein oder sich in unmittelbarer Reichweite des Behälters zu befinden;
- wahlweise Überprüfung (215) durch Abgleich mit dem Verfügbarkeitscode (D21), dass der Behältercode (D22) dem durch den Überführungsvorgang betroffenen Behälter tatsächlich entspricht, wodurch bei Entsprechung der Vorgang fortgeführt wird;
- Bereitstellung (216) durch die Benutzer-Anwendung, ohne notwendige Kommunikation mit dem Netz, eines Öffnungscodes (D23), der mindestens anhand des Verfügbarkeitscodes (D21) berechnet wird und mindestens darstellend:
∘ eine Identifizierung des Behälters (BAC) und
∘ einen Öffnungszeitbereich (pT2), der derart bestimmt ist, dass er dem gegenwärtigen Zeitpunkt nachgeordnet ist und dem Benutzer genügend Zeit zur Ausführung seines Vorgangs, insbesondere unter normalen Bedingungen, gibt;
- Vorbereitung (217) einer Nachricht durch die Benutzer-Anwendung mit Vorgangsbericht (D25), umfassend mindestens eine Angabe zur angeforderten Öffnung, welche die Erledigung des den Öffnungscode bereitstellenden Vorgangs (216) darstellt;
- nach Erkennung einer Vernetzung des tragbaren Benutzer-Endgeräts (TPI) mit dem drahtlosen Kommunikationsnetz, möglicherweise nach Bewegung (232) des Benutzers, automatisches Senden (233) der Nachricht mit Vorgangsbericht (D25) ausgehend vom tragbaren Benutzer-Endgerät (TPU) an das computergestützte Verwaltungssystem (SI) ohne erforderlichen Eingriff des Benutzers; und
- Speichern (235) durch das computergestützte Verwaltungssystem (SI) mindestens einer Angabe, die die Erledigung des Überführungsvorgangs durch den Benutzer darstellt;
und **dadurch gekennzeichnet, dass** es außerdem folgende Schritte umfasst:
- Empfang (221) des Öffnungscodes (D23) durch den Behälter (BAC) ausgehend vom Benutzer durch manuelle Eingabe oder ausgehend von der Anwendung;
- Bestimmung eines Öffnungszeitbereichs (pT2) durch den Behälter, durch das elektronische Schloss anhand des Öffnungscodes, durch Extraktion (D212) einer Zeitangabe (D232) anhand von dem Öffnungscodes (D23) oder durch Berechnung anhand des Zeitpunkts des Empfangs des Öffnungscodes, und
- Überprüfung (223) der Gültigkeit des Öffnungscodes (D23) durch den Behälter, mindestens umfassend:
∘ eine Überprüfung, dass der gegenwärtige Zeitpunkt tatsächlich in dem Öffnungszeitbereich liegt, und
∘ wenn dies nicht vorher (215) durch die Benutzer-Anwendung erfolgt ist, eine Überprüfung durch Abgleich mit einer in dem Behälter gespeicherten Identifizierung, dass der Öffnungscode (D23) dem von dem Überführungsvorgang betroffenen Behälter tatsächlich entspricht;
- wenn aus der Überprüfung ersichtlich ist, dass der Öffnungscode gültig ist, Befehl (224) zur Öffnung oder zur Entriegelung des Behälters, um Zugang zu dem Objekt (COL) zu gewähren.

2. Verfahren nach dem vorhergehenden Anspruch, **dadurch gekennzeichnet, dass** es außerdem folgende Schritte umfasst, welche durch die Benutzer-Anwendung ausgeführt werden, ohne dass die Kommunikation mit dem Netz erforderlich ist:
- Bestimmung eines Verfügbarkeitszeitbereichs (pT1) anhand der Verfügbarkeitsnachricht durch Extraktion (D212) anhand von dem Verfügbarkeitscodes (D21) oder durch Berechnung anhand einer Zeitstempelung der Verfügbarkeitsnachricht; und
- Überprüfung (215) der Gültigkeit des Verfügbarkeitscodes, umfassend mindestens eine Überprüfung, dass der gegenwärtige Augenblick innerhalb des Verfügbarkeitszeitbereichs liegt,
und dadurch, dass die Überprüfung der Gültigkeit (215) die Bereitstellung (216) des Öffnungscodes (D23) bedingt.

3. Verfahren nach einem der vorhergehenden Ansprüche, **dadurch gekennzeichnet, dass** die Überprüfung der Gültigkeit (215, 223) des Verfügbarkeitscodes (D21) oder des Öffnungscodes (D23) oder beider eine Überprüfung der Identität eines Senders des Codes durch Entschlüsselung einer Angabe einer elektronischen Nachricht und/oder durch Abgleich mit der Angabe einer elektronischen Nachricht umfasst.

4. Verfahren nach einem der vorhergehenden Ansprüche, **dadurch gekennzeichnet, dass** die Überprüfung der Gültigkeit (215, 223) des Verfügbarkeitscodes (D21) oder des Öffnungscodes (D23) oder beider derart ausgelegt ist, um eine einzige Verwendung des Codes zu ermöglichen.

5. Verfahren nach einem der vorhergehenden Ansprüche, **dadurch gekennzeichnet, dass**:
- der Öffnungszeitbereich (pT2) nach einer Dauer von zwischen 1 Min. und 30 Min. nach Bereitstellung (216) des Öffnungscodes (D23), insbesondere von zwischen 5 Min. und 20 Min., endet und
- der Verfügbarkeitszeitbereich, wenn er auch besteht, nach einer Dauer von zwischen 1 Tag und 10 Tagen nach Bereitstellung (202) des Verfügbarkeitscodes (D21) und insbesondere von zwischen 2 Tagen und 6 Tagen endet.

6. Verfahren (4) nach einem der vorhergehenden Ansprüche, **dadurch gekennzeichnet, dass**:
- der Behälter (BAC) andauernd oder als Antwort auf eine Handlung des Benutzers (UTI) oder der Benutzer-Anwendung seines Endgeräts (TPU) mindestens einen Statuscode (D42) berechnet und anzeigt (420), welcher einen Zustand oder mehrere Zustände des Behälters zu dem gegenwärtigen Zeitpunkt darstellt, und zwar aus den folgenden Ständen:
∘ eine eindeutige Identifizierung eines Ablagevolumens oder mehrerer Ablagevolumen, die innerhalb des Behälters angefordert wurden,
∘ ein Betriebsfunktionsniveau eines oder mehrerer seiner Bestandteile,
∘ ein Belegungsstand eines Ablagevolumens oder mehrerer Ablagevolumen, die innerhalb des Behälters angefordert wurden, und
∘ ein Stand oder ein Wert einer Uhr, die es zur Überprüfung der Gültigkeit der Öffnungscodes (D23), die er empfängt, verwendet;
- der Schritt zum Empfang (414) des Behältercodes durch die Benutzer-Anwendung umfasst eine Verwendung des Statuscodes (D42) als Ganzes oder als Teil des Behältercodes;
- der Schritt zur Überprüfung der Identifizierung des Behälters wird durch die Benutzer-Anwendung durchgeführt (415) und beinhaltet außerdem eine Überprüfung, dass der empfangene Statuscode (D42) einem für die Fortführung des Überführungsvorgangs zulässigen Zustand entspricht;
- der durch die Benutzer-Anwendung vorbereitete (217) Vorgangsbericht (D25) umfasst außerdem mindestens eine Angabe zu einer möglichen Öffnung, welche eine zufriedenstellende Überprüfung (415) des durch den Behälter bereitgestellten Statuscodes (D42) darstellt.

7. Verfahren (5) nach einem der vorhergehenden Ansprüche, **dadurch gekennzeichnet, dass**:
- der Schritt zum Empfang (514) des Behältercodes (D42) durch die Benutzer-Anwendung eine Herstellung einer elektronischen Kommunikation (520) mindestens ausgehend vom Behälter an die Benutzer-Anwendung umfasst;
- der Schritt des Öffnungsbefehls (224) durch den Behälter von einem Sendeschritt (525), per elektronische Kommunikation vom Behälter ausgehend an die Benutzer-Anwendung, mindestens einer Angabe zum offenen Behälter (D54) gefolgt wird, welche einen Zustand des offenen Behälters darstellt;
- der Schritt zur Vorbereitung (517) einer Nachricht als Vorgangsbericht (D55) durch die Benutzer-Anwendung, welche dann ein Einbetten einer Angabe einer durchgeführten Öffnung (D553) in der Nachricht umfasst, wobei die Angabe die Erledigung des Vorgangs (224) zur Entriegelung oder Öffnung des Behälters darstellt.

8. Verfahren nach dem vorhergehenden Anspruch, **dadurch gekennzeichnet, dass** es außerdem einen Schritt zur Erfassung eines Zustandswechsels mindestens eines Ablagevolumens zwischen einem Leerzustand und einem Zustand mit einem Objekt (COL) durch den Behälter umfasst,
wodurch ein Senden einer Angabe zur erledigten Überführung, ausgehend vom Behälter an die Benutzer-Anwendung, ausgelöst wird, wobei die Angabe die Erledigung durch den Benutzer einer Objekt-Überführung ausgehend von dem Behälter oder an den Behälter darstellt;
wobei die Angabe zur erledigten Überführung in der Nachricht mit Vorgangsbericht (D55) beinhaltet ist.

9. Verfahren nach einem der vorhergehenden Ansprüche, **dadurch gekennzeichnet, dass** es umfasst:
- einen Überführungsvorgang (1) nach einem der vorhergehenden Ansprüche, umfassend eine Ablage (118) eines Objekts (COL), insbesondere eines Pakets, in den Behälter (BAC) durch einen Zusteller (LOG) im Namen des Logistikbetreibers, wobei das Objekt (COL) aus einem Logistikversandzentrum stammt, und
- danach einen Überführungsvorgang (2, 4, 5) nach einem der vorhergehenden Ansprüche, umfassend eine Entnahme (231) des Objekts (COL) durch den Benutzer (UTI).

10. Verfahren nach dem vorhergehenden Anspruch, **dadurch gekennzeichnet, dass** der Vorgang (1) der Überführung per Ablage folgende Schritte umfasst:
- Senden (105), durch das Verwaltungs-Datenverarbeitungssystem (SI), einer elektronischen Nachricht an ein computergestütztes, tragbare Endgerät (TPL), mit welchem der Zusteller des Logistikbetreibers ausgestattet ist und welches mit einem drahtlosen Kommunikationsnetz (RC) kommuniziert oder dazu geeignet ist, und welches mindestens eine, zum Empfang der Nachricht geeignete mobile Benutzer-Anwendung ausführt, wobei die Nachricht eine Angabe zur Darstellung eines Überführungsbefehls (OT) umfasst, der zur Darstellung mindestens einer Identifizierung des auszuführenden Ablagevorgangs berechnet ist;
- nach einer Bewegung (113) des logistischen Zustellers bis zur Reichweite des Behälters, Ausführung der folgenden Schritte in dieser Reihenfolge oder in einer anderen:
∘ Empfang (116) durch die logistische Anwendung, insbesondere durch elektronische Ablesung und/oder manuelle Eingabe und/oder elektronische Kommunikation mit dem Objekt, eines Paketcodes zur Identifikation des Objekts (COL) und/oder des Ablagevorgangs,
∘ Empfang (114) durch die logistische Anwendung, insbesondere durch elektronische Ablesung und/oder manuelle Eingabe und/oder elektronische Kommunikation mit dem Objekt, eines Behältercodes zur Identifikation des Behälters (BAC),
∘ Ablage (118) des Objekts (COL) in ein Ablagevolumen des Behälters,
∘ Vorbereitung (120) durch die Benutzer-Anwendung einer Nachricht mit Vorgangsbericht (D15), umfassend mindestens eine Angabe zur erledigten Ablage, welche die Erledigung des Vorgangs zur Überführung per Ablage darstellt;
- nach Erkennung einer Vernetzung des tragbaren Benutzer-Endgeräts (TPL) mit dem drahtlosen Kommunikationsnetz, möglicherweise nach Bewegung (132) des logistischen Zustellers, Senden (133) der Nachricht mit Vorgangsbericht (D15) ausgehend vom tragbaren, logistischen Endgerät an das computergestützte Verwaltungssystem (SI); und
- Speichern (135) durch das computergestützte Verwaltungssystem (SI) mindestens einer Angabe zur Darstellung einer Erledigung des Überführungsvorgangs per Ablage.

11. Verfahren nach einem der vorhergehenden Ansprüche 1 bis 8, **dadurch gekennzeichnet, dass** der Überführungsvorgang (3) eine Ablage (331) durch den Benutzer (UTI) eines Objekts (COL), insbesondere eines Pakets, in den Behälter (BAC) umfasst und dadurch, dass es später eine Abholung des Objekts durch einen Abholer (LOG) im Namen des Logistikbetreibers umfasst.

12. Verfahren zur Verarbeitung von digitalen Angaben, von einem computergestützten, tragbaren Telefonie-Endgerät (TPU) eingesetzt, umfassend eine Ausführung von Programmanweisungen zur Durchführung der Vorgänge der mobilen Anwendung (AP) innerhalb eines Verfahrens (1, 2, 3, 4, 5) nach einem der vorhergehenden Ansprüche.

13. Verfahren zur Verarbeitung von digitalen Angaben, umfassend
- einerseits eine Ausführung durch einen oder mehrere Computer, die mit einem Mobilfunknetz (RC) kommunizieren, von Programmanweisungen zur Durchführung der Vorgänge des computergestützten Verwaltungssystems (SI) innerhalb eines Verfahrens (1, 2, 3, 4, 5) nach einem der Ansprüche 1 bis 11, und
- andererseits eine Ausführung durch ein elektronisches Schloss, das den Zugang zu dem Inhalt eines oder mehrerer Behälter steuert, von Programmanweisungen zur Durchführung der Vorgänge des Ablagebehälters (BAC) innerhalb eines Verfahrens nach einem der Ansprüche 1 bis 11.

14. Computersystem (SI), derart programmiert, um die Vorgänge eines Verfahrens nach Anspruch 13 durchzuführen.

15. Ablagebehälter (BAC) umfassend eins oder mehrere Ablagevolumen (B1), deren Zugang zu Inhalten durch ein elektronisch gesteuertes Schloss (B4) gesteuert ist, wobei die elektronische Steuerung derart programmiert ist, um die Vorgänge des Behälters eines Verfahrens nach Anspruch 13 durchzuführen.

## Claims

1. Method for managing the delivery logistics of one or more objects, in particular for distribution to or collection from a plurality of users (UTI), by at least one logistics operator,
comprising at least one operation of transferring an object (COL) by depositing then withdrawing said object in a drop-off container (BAC) access to the content of which is controlled by a lock controlled by an electronic controller,
said operation of transferring a defined object being carried out by a defined user (UTI),
**characterized in that** it comprises the following steps:
- dispatch (202), by a management information system (SI), of an electronic availability message to a portable computerized terminal (TPU) with which said user is equipped, communicating or capable of communicating with a wireless communication network (RC) and which executes at least one mobile user application capable of receiving said message, said message comprising an availability code (D21) calculated to represent at least one identification of a container determined for said transfer operation;
- reception (211) of said electronic availability message by said portable computerized terminal (TPU), and displaying or transmitting to the user an item of information representing at least one identification of said container;
- after a movement (213) of said user to within reach of said container, reception (214, 414) by the user application of a container code (D22) representing said container, by manual input by the user or electronic reading of a code (ID BAC) appearing on the container involved in the transfer operation, or by local electronic communication of the terminal with said container, thus creating for the user the need to be present or within immediate reach of said container;
- optionally, verification (215) that said container code (D22) correctly corresponds to the container involved in the transfer operation, by comparison with the availability code (D21), allowing the operation to continue if they correspond;
- provision (216), carried out by the user application without the need to communicate with the network, of an opening code (D23) calculated at least from the availability code (D21) and representing at least:
∘ an identification of said container (BAC), and
∘ an opening time range (pT2), determined in order to be subsequent to the present moment and to give the user sufficient time to carry out their operation, in particular under normal conditions;
- preparation (217), by the user application, of an operation report message (D25) comprising at least one item of opening requested data, which represents completion of the step of providing (216) the opening code;
- after detection of connectivity of the portable user terminal (TPI) with the wireless communication network, possibly after movement (232) of the user, automatic dispatch (233) of said operation report message (D25) from the portable user terminal (TPU) to the management information system (SI) without the need for intervention by the user; and
- storage (235) by said management information system (SI) of at least one item of data representing the completion of the transfer operation by the user;
and **in that** it also comprises the following steps:
- reception (221) of the opening code (D23) by the container (BAC) from the user by manual input or from the application;
- determination by the container of an opening time range (pT2), by the electronic lock from the opening code, by extraction (D212) of an item of time data (D232) from an opening code (D23) or by calculation from the moment of reception of said opening code; and
- verification (223) by the container of the validity of said opening code (D23), comprising at least:
∘ verification that the present moment is included in said opening time range, and
∘ if this has not previously been carried out (215) by the user application, verification that said opening code (D23) correctly corresponds to the container involved in the transfer operation, by comparison with an identification stored in said container;
- if said verification indicates that said opening code is valid, controlling (224) the opening or unlocking of said container so as to allow access to said object (COL).

2. Method according to the preceding claim, **characterized in that** it also comprises the following steps, carried out by the user application without the need to communicate with the network:
- determination of an availability time range (pT1) from the availability message, by extraction (D212) from the availability code (D21) or by calculation from a time stamp of said availability message; and
- verification (215) of the validity of the availability code, comprising at least one verification that the present moment is included in said availability time range;
and **in that** provision (216) of the opening code (D23) is conditional on said verification of validity (215).

3. Method according to any one of the preceding claims, **characterized in that** the verification of validity (215, 223) of the availability code (D21) or of the opening code (D23) or of both comprises a verification of the identity of a transmitter of said code, by decryption and/or comparison of an item of electronic signature data.

4. Method according to any one of the preceding claims, **characterized in that** the verification of validity (215, 223) of the availability code (D21) or of the opening code (D23) or of both is arranged in order to allow a single use of said code.

5. Method according to any one of the preceding claims, **characterized in that**:
- the opening time range (pT2) terminates after a duration comprised between 1 mn and 30 mn after the provision (216) of the opening code (D23), and in particular comprised between 5 mn and 20 mn; and
- the availability time range, when it exists, terminates after a duration comprised between 1 day and 10 days after provision (202) of the availability code (D21), and in particular comprised between 2 days and 6 days.

6. Method (4) according to any one of the preceding claims, **characterized in that**
- the container (BAC) calculates and displays (420), permanently or in response to an action of the user (UTI) or of the user application of his terminal (TPU), at least one status code (D42) representing one or several states of said container at the present moment, from the following states:
o unequivocal identification of one or more controlled deposit volumes within said container,
∘ a level of operational capacity of one or more of its components,
∘ an occupation status of one or more controlled deposit volumes within said container, and
∘ a state or a value of a clock which it uses to verify the validity of the opening codes (D23) that it receives;
- the step of reception (414) of the container code by the user application comprises a use of said status code (D42) as all or part of the container code;
- the step of verifying the identification of the container is carried out (415) by the user application, and also includes a verification that the status code (D42) received corresponds to a state acceptable for continuation of the transfer operation;
- the operation report (D25) prepared (217) by the user application also comprises at least one possible item of opening data, which represents a satisfactory verification (415) of the status code (D42) provided by the container.

7. Method (5) according to any one of the preceding claims, **characterized in that**:
- the step of reception (514) of the container code (D42) by the user application comprises establishment of an electronic communication (520) at least from the container to said user application;
- the step of controlling the opening (224) by the container is followed by a step of dispatching (525), via said electronic communication from the container to the user application, at least one item of open container data (D54) representing an open container state;
- the step of preparation (517) of an operation report message (D55) by the user application, thus comprising inclusion in said message of an item of completed opening data (D553) which represents completion of the step (224) of unlocking or opening the container.

8. Method according to the preceding claim, **characterized in that** it also comprises a step of detection, by the container, of a change of state of at least one deposit volume between an empty state and a state containing an object (COL);
which triggers dispatch, from the container to the user application, of an item of transfer completed data representing completion by the user of a transfer of the object from or to the container;
said item of transfer completed data is included in the operation report message (D55).

9. Method according to any one of the preceding claims, **characterized in that** it comprises:
- a transfer operation (1) according to any one of the preceding claims, comprising a drop-off (118) in the container (BAC), by a delivery agent (LOG) on behalf of the logistics operator, an object (COL) originating from a logistics distribution centre, in particular a parcel; and
- subsequently, a transfer operation (2, 4, 5) according to any one of the preceding claims, comprising the withdrawal (231) of said object (COL) by the user (UTI).

10. Method according to the preceding claim, **characterized in that** the transfer operation (1) by depositing comprises the following steps:
- dispatch (105), by the management information system (SI) of an electronic message (D11) to a computerized portable terminal (TPL) with which the logistics operator is equipped, communicating or capable of communicating with a wireless communication network and which executes at least one mobile logistics application capable of receiving said message, said message comprising an item of data representing a transfer order (OT), calculated to represent at least one identification of the depositing operation to be carried out;
- after a movement (113) of said logistics agent to within reach of said container, carrying out the following phases, in this order or in another order:
∘ reception (116) by the logistics application, in particular by electronic reading and/or manual input and/or electronic communication with the object, of a parcel code identifying the object (COL) and/or the depositing operation,
∘ reception (114) by the logistics application, in particular by electronic reading and/or manual input and/or electronic communication with the object, of a container code identifying the container (BAC),
∘ depositing (118) the object (COL) in a deposit volume of said container,
∘ preparation (120), by the logistics application, of an operation report message (D15) comprising at least one item of delivery completed data, which represents completion of the operation of transfer by delivery;
- after detection of connectivity of the portable logistics terminal (TPL) with the wireless communication network, possibly after movement (132) of the logistics agent, dispatching (133) said operation report message (D15) from said portable logistics terminal to the management information system (SI); and
- storage (135) by said management information system (SI) of at least one item of data representing a completion of the transfer operation by depositing.

11. Method according to any one of claims 1 to 8, **characterized in that** the transfer operation (3) comprises depositing (331) by the user (UTI) of an object (COL) into the container (BAC), in particular a parcel, and **in that** it also comprises collection of said object by a collection agent (LOG) on behalf of the logistics operator.

12. Method for processing digital data, implemented by a computerized portable telephony terminal (TPU), comprising executing programme instructions carrying out the operations of the mobile application (AP) within a method (1, 2, 3, 4, 5) according to any one of the preceding claims.

13. Method for processing digital data, comprising
- on the one hand, execution, by one or more computers communicating with a wireless telephony network (RC), programme instructions carrying out the operations of the management information system (SI) within a method (1, 2, 3, 4, 5) according to any one of claims 1 to 11; and
- on the other hand, execution, by an electronic lock controlling access to the content of one or more containers, programme instructions carrying out the operations of the drop-off container (BAC) within a method according to one of claims 1 to 11.

14. Information system (SI) programmed to carry out the operations of a method according to claim 13.

15. Drop-off container (BAC) comprising one or more deposit volumes (B1) access to the content of which is controlled by a lock controlled by an electronic controller (B4), which is programmed in order to carry out the container operations of a method according to claim 13.
